# EUROPEAN PATENT SPECIFICATION

(11) **EP 3 660 679 B1**
(45) Date of publication and mention of the grant of the patent: **06.03.2024**
(21) Application number: 18838066.1
(22) Date of filing: 07.02.2018
(51) Int. Cl.: G06F 11/14

(54) **DATA BACKUP METHOD, DEVICE AND SYSTEM**
DATENSICHERUNGSVERFAHREN, -VORRICHTUNG UND -SYSTEM
PROCÉDÉ, DISPOSITIF ET SYSTÈME DE SAUVEGARDE DE SÉCURITÉ DE DONNÉES

(30) Priority: 28.07.2017 CN 201710633057
(43) Date of publication of application: 03.06.2020
(73) Proprietor: ZTE Corporation, Shenzhen, Guangdong 518057 (CN)
(72) Inventor: YANG, Kun, Shenzhen Guangdong 518057 (CN); LU, Chen, Shenzhen Guangdong 518057 (CN); XIE, Fang, Shenzhen Guangdong 518057 (CN)
(74) Representative: Regimbeau
(86) International application number: PCT/CN2018/075665
(87) International publication number: WO 2019/019607

(56) References cited:
- CN-A- 1 747 347
- CN-A- 101 599 079
- CN-A- 101 996 108
- CN-A- 106 357 811
- US-A1- 2010 131 696

## Description

### TECHNICAL FIELD

The present invention relates to the field of communications and, in particular, a data backup method, device and system.

### BACKGROUND

According to backup methods in the related art, backup is mainly implemented between a main node and a backup node. The backup, which occurs between the main node and the backup node, requires consistency in hardware of the backup node and the main node. When the main node operates normally, the backup node does not access into the system, and only a backup operation is implemented on the main node; when the main node fails, the backup node is directly switched into the system for use; or the backup occurs between a main device and a backup device, when the main device fails, switching is implemented between the main device and the backup device, so that the backup device takes over work of the main device.

In the related art, data of the main node is backed up by a dedicated backup node in most cases. This requires a large number of dedicated backup nodes. These dedicated backup nodes only play a backup role when main nodes operate normally, and the backup nodes do not delete invalid backup data, which consumes a large amount of resources. Therefore the dedicated backup nodes are only applied to important nodes in the system. So a network which does not have any special important nodes, has a limited scale and is unable to support any backup nodes is not applicable to the related arts. With respect to the network unable to use the dedicated backup node, the present invention provides a method that does not need a dedicated backup node and can save node storage space by deleting invalid backup data.

In view of the above-mentioned problems in the related art, no effective solution has been found so far.

Further relevant technologies are also known from US 2010/131696 A1 which relates to a system and method for information handling system data redundancy, and CN1747347A which relates to a duplication of distributed configuration database system.

### SUMMARY

Embodiments of the present invention provide a data backup method, device and system, to at least solve the problem that resources are wasted when data is backed up using a main node and a backup node in the related art.

A data backup method is provided according to an embodiment of the present invention, the method includes steps described below. A second node receives backup data transmitted by a first node according to a first cycle, where the first node and the second node are cooperation nodes to each other; and the second node deletes backup data of the first node locally stored in the second node according to a request of the first node.

Optionally, after the second node performs data backup of the first node, the method further includes a step described below. When the first node is offline, the second node transmits the backup data of the first node to the data platform.

Optionally, the step in which the second node transmits the backup data of the first node to the data platform includes steps described below. The second node transmits a backup data recovery request message to the data platform; after receiving a backup data recovery acceptance message fed back by the data platform, the second node transmits the backup data of the first node locally stored in the second node to the data platform.

Optionally, after the second node transmits the backup data of the first node locally stored in the second node to the data platform, the method further includes steps described below. The second node receives a backup data confirmation message transmitted by the data platform; and the second node deletes the locally stored backup data of the first node transmitted to the data platform.

Optionally, the backup data includes data generated by the first node during a period from time of last transmission of backup data from the first node to the second node to current time.

Optionally, the backup data recovery request message includes start time and end time of backup of the first node in a cooperation node of the first node.

Optionally, the backup data recovery acceptance message includes start time and end time of recovery of the backup data of the first node desired by the data platform.

Optionally, the step in which the second node deletes the backup data of the first node locally stored in the second node according to the request of the first node includes a step described below. The second node deletes first backup data locally stored in the second node according to the request of the first node, where the first backup data is data transmitted by the first node to the data platform.

Optionally, the method further includes steps described below. When the second node receives the backup data transmitted by the first node, the second node deletes second backup data locally stored in the second node exceeding a local storage capacity to satisfy the local storage capacity, where the second backup data is determined according to backup time.

Optionally, after the second node receives the backup date transmitted by the first node according to the first cycle, the method further includes steps described below. The second node verifies correctness of the backup data; when the backup data is correct, the second node transmits a backup data reception confirmation message to the first node.

Optionally, the backup data confirmation message is fed back after the data platform confirms correctness of the received backup data.

Optionally, the second node is a terminal or gateway, and the first node is a terminal or gateway.

A data backup method is provided according to an embodiment of the present invention, the method includes steps described below. A first node transmits backup data to a second node according to a first cycle, where the first node and the second node are cooperation nodes to each other; the first node transmits original data of the first node to a data platform according to a second cycle; and the first node requests the second node to delete the backup data locally stored in the second node.

Optionally, the second cycle is greater than the first cycle.

Optionally, the method further includes a step described below. The first node transmits backup data to a third node according to a third cycle, where the first node and the third node are cooperation nodes to each other.

Optionally, when the first node is offline, each of the second node and the third node transmits a backup data recovery request message to the data platform; one of the second node or the third node receives a backup data recovery acceptance message transmitted by the data platform, the other of the second node or the third node receives a backup data recovery rejection message transmitted by the data platform; and the one of the second node or the third node receiving the backup data recovery acceptance message transmits the backup data of the first node to the data platform, and the other of the second node or the third node receiving the backup data recovery rejection message deletes the backup data of the first node.

Optionally, the backup data recovery request message includes start time and end time of local backup of the first node in a cooperation node of the first node.

Optionally, the backup data recovery acceptance message includes start time and end time of recovery of the backup data of the first node desired by the data platform.

Optionally, the step in which the first node requests the second node to delete the backup data locally stored in the second node includes a step described below. The first node requests the second node to delete first backup data locally stored in the second node, where the first backup data is data transmitted to the data platform by the first node.

Optionally, before the first node requests the second node to delete the backup data locally stored in the second node, the method further includes a step described below. The first node receives a reception confirmation message for the original data.

Optionally, the reception confirmation message is transmitted after the data platform verifies correctness of the original data.

Optionally, the second node is a terminal or gateway, and the first node is a terminal or gateway.

Optionally, the third node is a terminal or gateway.

According to another embodiment of the present invention, a data backup device applied to a second node is provided, the device includes a backup module and a deletion module. The backup module is configured to receive backup data transmitted by a first node according to a first cycle, where the first node and the second node are cooperation nodes to each other; and the deletion module is configured to delete backup data of the first node locally stored in the second node according to a request of the first node.

According to another embodiment of the present invention, another data backup device applied to a first node is provided, the device includes a transmitting module, an uploading module and a requesting module. The transmitting module is configured to transmit backup data to a second node according to a first cycle, where the first node and the second node are cooperation nodes to each other; the uploading module is configured to upload original data of the first node to a data platform according to a second cycle; and the requesting module is configured to request the second node to delete the backup data locally stored in the second node.

According to another embodiment of the present invention, a data backup system is provided, the system includes a first node, a second node and a data platform, the first node includes a transmitting module, an uploading module and a requesting module, the transmitting module is configured to transmit backup data to a second node according to a first cycle; the uploading module is configured to upload original data of the first node to a data platform according to a second cycle; and the requesting module is configured to request the second node to delete the backup data locally stored in the second node; the second node includes a backup module and a deletion module, the backup module is configured to receive backup data transmitted by the first node according to a first cycle; and the deletion module is configured to delete the backup data of the first node locally stored in the second node according to a request of the first node; the data platform is configured to receive the original data uploaded by the first node.

According to another embodiment of the present invention, a storage medium is provided, the storage medium is configured to store a program code for execution following steps:
backup data transmitted by a first node is received according to a first cycle, where the first node and a second node are cooperation nodes to each other; and
backup data of the first node locally stored in the second node is deleted according to a request of the first node.

Through the present invention, data of the first node is backed up by the second node, and backup data locally stored in the second node is deleted according to the request of the first node, thus the problem that resources are wasted when the data is backed up using the main node and the backup node in the related art is solved, on the premise of ensuring data backup, storage resources can be saved, and resource utilization rate is improved.

### BRIEF DESCRIPTION OF DRAWINGS

Drawings described herein are used to provide further understanding of the present invention and form a part of this application. The illustrative embodiments of the present invention and the description thereof are used to explain the present invention and do not constitute improper limitations to the present invention. In the drawings:
FIG. 1 is a schematic diagram of network architecture according to the present invention;
FIG. 2 is a flowchart of a data backup method according to an embodiment of the present invention;
FIG. 3 is a flowchart of another data backup method according to an embodiment of the present invention;
FIG. 4 is a block diagram of a data backup device according to an embodiment of the present invention;
FIG. 5 is a block diagram of another data backup device according to an embodiment of the present invention;
FIG. 6 is a block diagram of a data backup system according to an embodiment of the present invention;
FIG. 7 is a flowchart of node backup data transmission according to the present embodiment;
FIG. 8 is a flowchart of node backup data deletion according to an embodiment of the present invention;
FIG. 9 is a flowchart of node data recovery according to an embodiment of the present invention;
FIG. 10 is a flowchart of node data recovery with an embodiment of the present invention including multiple cooperation nodes.

### DETAILED DESCRIPTION

Hereinafter, the present invention will be described in details with reference to the drawings and embodiments. It should be noted that the embodiments in this application and features in the embodiments may be combined with each other without conflict.

It should be noted that terms of "first", "second" and so on in the description, claims and drawings of the present invention are used to distinguish similar objects and are not necessarily used to describe a specific order or sequence.

### Embodiment one

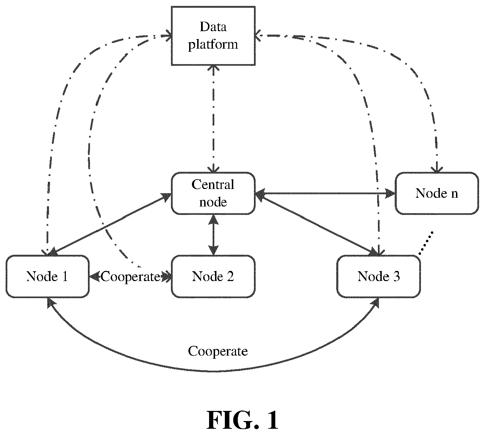

The embodiments of the present application operate on a network architecture shown in FIG. 1, as shown in FIG.1, FIG.1 is a schematic diagram of network architecture of the embodiment of the present invention, the network architecture includes a data platform, common nodes (node 1 to node n), and a central node. This embodiment is applied to a network, in which a relationship between the central node and cooperation nodes has been determined, and each node needs to upload relevant data to the data platform. Each node has 0, 1 or 2 cooperation nodes, and each of the cooperation nodes may monitor a survival state of each other and back up related data of each other. The central node has all functions of the common nodes, and also a specific function lacking in the common nodes, namely, distribution of a cooperation relationship of all nodes in the network according to a network topology.

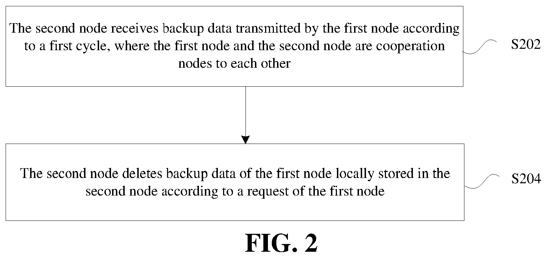

A data backup method operating on the above network architecture is provided according to the present embodiment, FIG. 2 is a flowchart of a data backup method according to an embodiment of the present invention, as shown in FIG. 2, the method includes steps described below.

Step S202, the second node receives backup data transmitted by the first node according to a first cycle, where, the first node and the second node are cooperation nodes to each other.

Step S204, the second node deletes backup data of the first node locally stored in the second node according to a request of the first node.

Through the above steps, data of the first node is backed up by the second node, then the backup data locally stored in the second node is deleted according to the request of the first node, thus the problem that resources are wasted when the data is backed up using the main node and the backup node in the related art is solved, on the premise of ensuring data backup, storage resources can be saved, and the resource utilization rate is improved.

Optionally, the second node as an execution subject of the above steps may be any node in the network, such as, but is not limited to, a gateway node, a terminal, a smart power grid node, a network element.

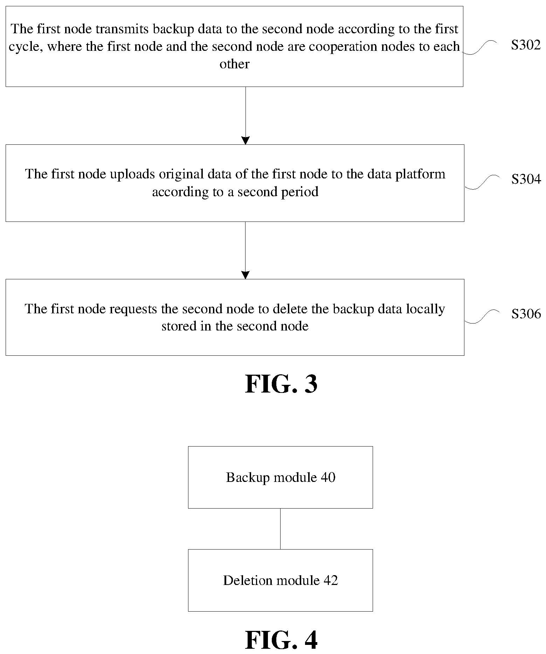

Another data backup method related to FIG. 3 and described below is not part of the invention application.

Another data backup method operating on the above network architecture is provided according to the present embodiment. FIG. 3 is a flowchart of another data backup method according to an embodiment of the present invention, as shown in FIG. 3, the method includes steps described below.

Step S302, the first node transmits backup data to the second node according to the first cycle, where, the first node and the second node are cooperation nodes to each other.

Step S304, the first node uploads original data of the first node to the data platform according to a second period, preferably, the second period is greater than the first period.

Step S306, the first node requests the second node to delete the backup data locally stored in the second node.

Optionally, the first node as an execution subject of the above steps may be any node in the network, such as, but is not limited to, a gateway node, a terminal, a smart power grid node, a network element, and etc..

Optionally, after the second node performs data backup of the first node according to the first cycle, the method further includes a step described below. When the first node is offline, the second node transmits the backup data of the first node to the data platform.

Optionally, the step in which the second node transmits the backup data of the first node to the data platform includes steps described below.

S11, the second node transmits a backup data recovery request message to the data platform.

S 12, after receiving a backup data recovery acceptance message fed back by the data platform, the second node transmits the backup data of the first node locally stored in the second node to the data platform.

Optionally, after the second node transmits the backup data of the first node locally stored in the second node to the data platform, the method further includes steps described below.

S21, the second node receives a backup data confirmation message transmitted by the data platform; optionally, the backup data confirmation message is transmitted after the data platform confirms correctness of the received backup data.

S22, the second node deletes the locally stored backup data transmitted by the first node to the data platform.

Optionally, the backup data includes data generated by the first node during a period from time of last transmission of backup data from the first node to the second node to current time. That is, the backup data includes data generated within a time period.

Optionally, the backup data recovery request message includes start time and end time of backup of the first node in a cooperation node of the first node.

Optionally, the backup data recovery acceptance message includes start time and end time of recovery of the backup data of the first node desired by the data platform.

Optionally, the step in which the second node deletes the backup data of the first node locally stored in the second node according to the request of the first node includes a step described below: the second node deletes first backup data locally stored in the second node according to the request of the first node, where the first backup data is data transmitted by the first node to the data platform.

As another alternative solution, not part of the invention, deletion of the backup data may not be executed according to the request of the first node, and may include following steps: when the second node receives the backup data transmitted by the first node, the second node deletes second backup data locally stored in the second node exceeding a local storage capacity to satisfy the local storage capacity, where the second backup data is determined according to backup time. The earlier the time is, the higher priority the second backup data has.

Optionally, after the second node receives the backup data transmitted by the first node according to the first cycle, the method further includes steps described below.

S31, the second node verifies the correctness of the backup data.

S32, when the backup data is correct, the second node transmits a backup data confirmation message to the first node.

This specific process includes following steps: the first node generates the backup data according to the first cycle; the first node initiates a data backup request message to the second node; the second node transmits a backup transmission consent message; the first node transmits the backup data to the second node; the second node verifies the correctness of the backup data transmitted by the first node; and the second node transmits a data backup confirmation message to the first node.

In the present embodiment, when there are multiple cooperation nodes, the system further includes a third node, the first node transmits backup data to the third node according to a third cycle, where the first node and the third node are cooperation nodes to each other, and the data recovery process includes steps described below.

S41, when the first node is offline, each of the second node and the third node transmits a backup data recovery request message to the data platform.

S42, one of the second node or the third node receives a backup data recovery acceptance message transmitted by the data platform, and the other of the second node or the third node receives a backup data recovery rejection message transmitted by the data platform.

S43, the one of the second node or the third node receiving the backup data recovery acceptance message transmits the backup data of the first node to the data platform, and the other of the second node or the third node receiving the backup data recovery rejection message deletes the backup data of the first node.

Optionally, the step in which the first node requests the second node to delete the backup data locally stored in the second node includes a step described below. The first node requests the second node to delete first backup data locally stored in the second node, where the first backup data is data transmitted by the first node to the data platform.

Optionally, before the first node requests the second node to delete the backup data locally stored in the second node, the method further includes steps described below. The first node receives a reception confirmation message for the original data; optionally, the reception confirmation message is transmitted by the data platform after the data platform verifies the correctness of the original data, meanwhile the reception confirmation message may be transmitted after the data platform stores the original data.

From the description of the above embodiments, those skilled in the art may clearly understand that the methods according to the above embodiments may be implemented by means of software plus necessary general-purpose hardware platforms, and of course, may also be implemented by means of hardware, but in many cases the former is a better embodiment. Based on this understanding, the technical solutions of the present invention may be embodied in the form of a software product that is stored in a storage medium (e.g., a read-only memory (ROM)/random access memory (RAM), a magnetic disk, an optical disk) and includes several instructions to cause a terminal device (e.g., a mobile phone, a computer, a server, network device, etc.) to perform the methods described in various embodiments of the present invention.

### Embodiment two

This embodiment further provides a data backup device and system. The device is used to implement the above embodiments and preferred embodiments, which have already been described and will not be described again. As used below, a term of "module" may be a combination of software and/or hardware that may implement a predetermined function. Although the device described in following embodiments is preferably implemented in software, an implementation of hardware, or a combination of software and hardware, is also possible and contemplated.

FIG. 4 is a block diagram of a data backup device according to an embodiment of the present invention, as shown in FIG. 4, the data backup device may be applied to a second node and the device includes a backup module 40 and a deletion module 42.

The backup module 40 is configured to receive backup data transmitted by a first node according to a first cycle, where the first node and the second node are cooperation nodes to each other.

The deletion module 42 is configured to delete backup data locally stored in the second node of the first node according to a request of the first node.

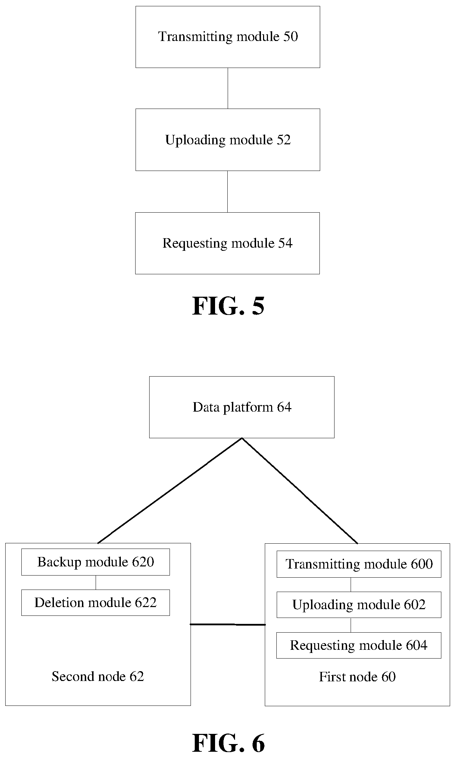

Another data backup device related to FIG. 5 and described below is not part of the invention application.

FIG. 5 is a block diagram of another data backup device according to an embodiment of the present invention, as shown in FIG. 5, the device may be applied to a first node and includes a transmitting module 50, an uploading module 52 and a requesting module 54.

The transmitting module 50 is configured to transmit backup data to a second node according to a first cycle, where the first node and the second node are cooperation nodes to each other.

The uploading module 52 is configured to upload original data of the first node to a data platform according to a second period, preferably, the second period is greater than the first period.

The requesting module 54 is configured to request the second node to delete the backup data locally stored in the second node.

A data backup system related to FIG. 6 and described below is not part of the invention application.

FIG. 6 is a block diagram of a data backup system according to an embodiment of the present invention, as shown in FIG. 6, the system includes a first node 60, a second node 62, and a data platform 64, where the first node and the second node are cooperation nodes to each other.

The first node 60 includes a transmitting module 600, an uploading module 602 and a requesting module 604.

The transmitting module 600 is configured to transmit backup data to the second node according to the first cycle.

The uploading module 602 is configured to upload the original data of the first node to the data platform according to a second period, preferably, the second period is greater than the first period.

The requesting module 604 is configured to request the second node to delete the backup data locally stored in the second node.

The second node 62 includes a backup module 620 and a deletion module 622.

The backup module 620 is configured to receive backup data transmitted by the first node according to the first cycle.

The deletion module 622 is configured to delete the backup data of the first node locally stored in the second node according to a request of the first node.

The data platform 64 is configured to receive the original data uploaded by the first node.

It should be noted that each of the above modules may be implemented by software or hardware, and the latter may be implemented by following methods, but is not limited thereto: the above modules are all located in a same processor; alternatively, the above modules as any combination may be located in different processors.

### Embodiment three

This embodiment is an optional embodiment according to the present invention, which is used to make a detailed and supplementary description of the present application in combination with specific scenes and embodiments:
this embodiment describes the purpose of cooperation inter-node backup, that is, to reduce data loss when nodes are offline abnormally.

The present embodiment describes rules for backup between cooperation nodes.

The present embodiment describes rules for a node to delete backup of a cooperation node of the node, that is, its cooperation node requests this node to delete corresponding backup after the data is uploaded to the data platform.

The present embodiment further describes two situations, i.e., one cooperation node and two cooperation nodes, and rules for a node to recovery data of an offline cooperation node to the data platform.

In a network in which the relationship between the central node and the cooperation nodes has been determined, all nodes need to upload relevant data to the data platform. In order to reduce the network pressure of the data platform, a time interval for a node to upload data to the data platform is relatively large, if a node is offline due to network abnormality and other reasons, which may cause relatively more data lost. First, the cooperation nodes back up data with each other at a relatively smaller time interval than the time interval for a node to upload data to the data platform. When a node monitors and discovers that its cooperation node is offline, the node uploads backup data to the data platform to reduce data loss.

The present embodiment also includes following embodiments.

A node data backup method embodiment

The present embodiment provides a node data backup method, which reduces data loss through data backup among cooperation nodes, when a node is offline abnormally.

The time interval of a backup process when nodes operate normally is denoted as t. The time interval needs to be mutually agreed by cooperation nodes according to network conditions and own conditions of the cooperation nodes after the cooperation nodes are selected, the time interval may be more than 2 times smaller than the time interval for a node to upload data to the data platform. Different cooperation nodes in the network may have different time intervals.

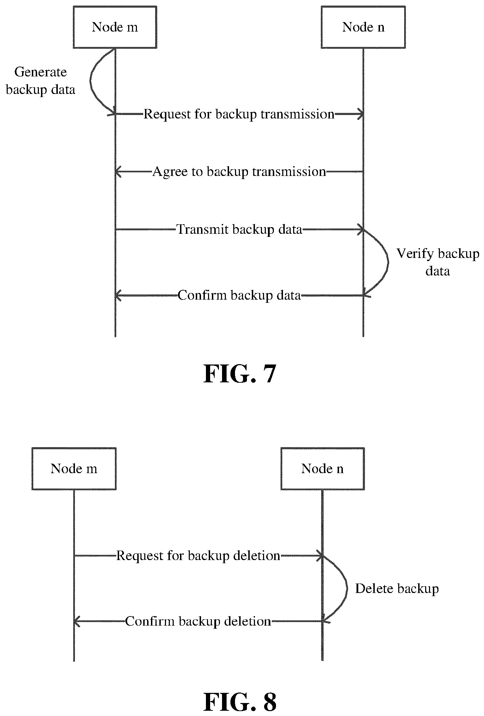

Please refer to FIG. 7, which is a diagram of a node backup data transmission flow according to an embodiment. This figure shows a backup process between any pair of cooperation nodes in the network, which needs to be implemented among all cooperation nodes in the network. Node m (corresponding to the first node in the above embodiments) and node n (corresponding to the second node in the above embodiments) are cooperation nodes to each other.

Step S101: a node m generates backup data.

Step S102: the node m initiates a backup request message to a node n.

Step S103: the node n transmits a backup transmission consent message to the node n.

Step S104: the node m transmits the backup data to the node n.

Step S105: the node n verifies correctness of the backup data transmitted by the node m.

Step S106: the node n transmits a backup data confirmation message to the node m.

The above process is only a one-way process for the node m to transmit the backup data to the node n, the node n may transmit the backup data to the node m in the same process to make this backup to be bidirectional.

The backup data may include all data generated during a period from time of last transmission of backup data transmitted from the node m to the node n to current time.

The backup request message may include a time stamp T, which is the time when the node m generates the backup data for this backup.

A node backup data deletion method embodiment

This embodiment needs to be executed after a node transmits data to the data platform. Steps to be performed between node m and node n refer to FIG. 8, which is a flowchart of node backup data deletion according to an embodiment of the present invention, the process includes steps described below.

Step S201: a node m transmits a backup deletion request message to a node n after the node m completes a process of uploading data to the data platform.

Step S202: the node n deletes corresponding backup data according to the backup deletion request.

Step S203: the node n transmits a backup deletion confirmation message to the node m.

The backup deletion request message may include a time stamp T, which is the time when the node m transmits data to the data platform.

The node n may delete all data in backup before T according to the time stamp T.

Optionally, when nodes have weak computing and storage capacity, and all data in a time interval between two times of uploading data to the data platform by a cooperation node may not be stored, the node backup data deletion method embodiment is changed into followings: the node m and the node n are cooperation nodes to each other, the node n deletes the backup data each time when the node m transmits the backup data, and data exceeding the capacity is deleted from earliest time to latest time.

A node data recovery method embodiment

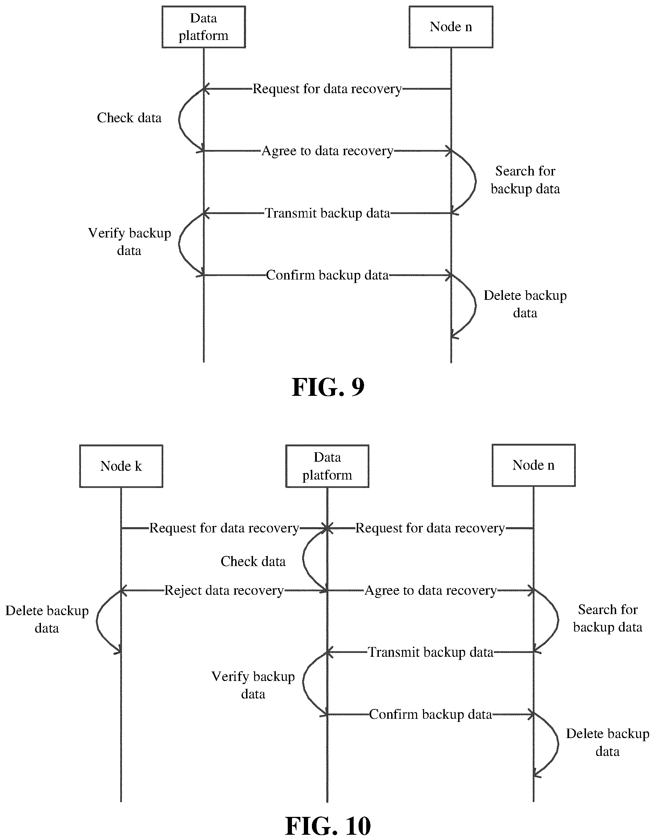

This embodiment needs to be executed after a node detects that one of its cooperation nodes is offline. When node m only has one cooperation node n, when node n detects that its cooperation node m is offline, steps to be performed for data recovery between node n and the data platform refer to FIG. 9, which is a flowchart of node data recovery according to an embodiment of the present invention, the flowchart includes steps described below.

Step S301: a node n transmits a data recovery request message to the data platform.

Step S302: the data platform checks latest time where a node m uploads data.

Step S303: the data platform transmits a data recovery consent message to the node n.

Step S304: the node n searches backup data of the node m according to the data recovery consent message.

Step S305: the node n transmits the backup data of the node m to the data platform.

Step S306: the data platform verifies the backup data.

Step S307: the data platform transmits a backup data confirmation message to the node n.

Step S308: the node n deletes the backup data of the node m.

The node m has two cooperation nodes, i.e., a node n and a node k, when the node m is offline abnormally, steps to be performed for data recovery between the node n, the node k and the data platform refer to FIG. 10, which is a flowchart of node data recovery when an embodiment of the present invention includes multiple cooperation nodes, the recovery process includes steps described below.

Step S401: each of the node n and the node k transmits a data recovery request message to the data platform.

Step S402: the data platform checks latest time of node m uploading data and selects a node as a data recovery node according to the data recovery request messages transmitted by the node n and the node k, so the node n is selected here.

Step S403: the data platform transmits a data recovery consent message to the node n and a data recovery rejection message to the node k.

Step S404: the node n searches backup data of the node m according to the data recovery consent message, and the node k deletes the backup data of the node m.

Step S405: the node n transmits the backup data of the node m to the data platform.

Step S406: the data platform verifies the backup data.

Step S407: the data platform transmits a backup data confirmation message to the node n.

Step S408: the node n deletes the backup data of the node m.

Where, the data recovery request message may include start time and end time of backup of the node m. The data recovery consent message may include start time and end time of acquisition of the backup data of the node m desired by the data platform after the data platform checks the data.

Rules for the data platform to select a data recovery node include that the backup of node m included in the node may fill in more data of node m missing from the data platform, i.e., it is determined according to the start time and end time of the backup of node m included in the data recovery request message.

The cooperation node backup method and recovery method are provided according to this embodiment. According to the present backup method and recovery method, when some node in the network is offline abnormally, so data loss may be minimized. The node data backup method embodiment can redundantly save node data, so that the node data recovery method embodiment may be implemented after a node is offline abnormally. According to the node backup data deletion method embodiment, data without storage may be deleted in time, and node storage space can be saved. The node data recovery method embodiment can recover data loss caused by an abnormal offline of a node.

There are various application scenarios of the present embodiment, for example, a smart power grid ensures safety, reliability and economy of power consumption through monitoring power consumption load, making power supply plans and price adjustment solutions. When some power devices in the power grid trip due to an overload, or some power devices are damaged due to natural/human factors, the smart power grid needs to minimize data loss caused by an abnormal offline of a device. However, due to a centralized structure of smart power grid at present, collected data is regularly reported to the data platform, which may cause more data loss when some power devices have problems. Therefore, it is necessary to backup data among cooperation nodes, when it is found that a cooperation node is unable to connect, the previously collected backup data will be reported to the data platform instead of the cooperation node, so as to minimize data loss.

### Embodiment four

An embodiment of the present invention further provides a storage medium. Optionally, in this embodiment, the above storage medium may be configured to store program codes for executing following steps:
S 1, backup data transmitted by a first node is received according to a first cycle, where, the first node and the second node are cooperation nodes to each other; and
S2, locally stored backup data of the first node is deleted according to a request of the first node.

Optionally, in this embodiment, the above storage medium may include, but is not limited to, a USB disk, a ROM, a RAM, a removable hard disk, a magnetic disk or an optical disk, and other various media that may store program codes.

Optionally, in this embodiment, the step in which the backup data transmitted by the first node is received according to the first cycle is executed by a processor according to the program codes stored in the storage medium, where, the first node and the second node are cooperation nodes to each other;
optionally, in this embodiment, the step in which the locally stored backup data of the first node is deleted according to the request of the first node is executed by the processor according to the program codes stored in the storage medium.

Optionally, specific examples of this embodiment may refer to the embodiments described in the above-mentioned embodiments and alternative embodiments, and this embodiment will not be repeated here.

Obviously, those skilled in the art should understand that the above-mentioned modules or steps of the present invention may be implemented by a general-purpose computing device, these may be integrated on a single computing device, or distributed in a network containing multiple computing devices, alternatively, these modules or steps may be implemented by program codes executable by a computing device, so that they may be stored in a storage device for execution by the computing device, and in some cases, the steps shown or described may be performed in a sequence different from that herein, or they may be separately fabricated into individual integrated circuit modules, alternatively, multiple modules or steps among them may be fabricated into a single integrated circuit module. Therefore, the present invention is not limited to any specific combination of hardware and software.

## Claims

1. A data backup method, the method comprising:
receiving (202), by a second node, backup data transmitted by a first node according to a first cycle, wherein the first node and the second node are cooperation nodes to each other; and
deleting (204), by the second node, backup data of the first node locally stored in the second node according to a request of the first node;
**characterized in that**
the method operates on a network architecture comprising the data platform and multiple nodes, including the first and second node; and
wherein the first node and the second node are different nodes on the network architecture.

2. The method according to the claim 1, wherein after the second node performs data backup of the first node according to the first cycle, the method further comprises:
in a case of the first node being offline, transmitting, by the second node, the backup data of the first node to the data platform.

3. The method according to the claim 2, wherein transmitting, by the second node, the backup data of the first node to the data platform comprises:
transmitting, by the second node, a backup data recovery request message to the data platform; and
after receiving a backup data recovery acceptance message fed back by the data platform, transmitting, by the second node, the backup data of the first node locally stored in the second node to the data platform.

4. The method according to the claim 3, wherein after transmitting, by the second node, the backup data of the first node locally stored in the second node to the data platform, the method further comprises:
receiving, by the second node, a backup data confirmation message transmitted by the data platform; and
deleting, by the second node, the locally stored backup data of the first node transmitted to the data platform,
wherein the backup data confirmation message is fed back after the data platform confirms correctness of the received backup data.

5. The method according to the claim 1, wherein the backup data comprises: data generated by the first node during a period from time of last transmission of backup data from the first node to the second node to current time.

6. The method according to claim 3, wherein the backup data recovery request message comprises start time and end time of backup of the first node in a cooperation node of the first node.

7. The method according to claim 3, wherein the backup data recovery acceptance message comprises start time and end time of recovery of the backup data of the first node desired by the data platform.

8. The method according to claim 1, wherein deleting, by the second node, the backup data of the first node locally stored in the second node according to the request of the first node comprises:
deleting, by the second node, first backup data locally stored in the second node according to the request of the first node, wherein the first backup data is data transmitted by the first node to a data platform.

9. The method according to claim 1 or claim 8, wherein
the method further comprises:
in a case of receiving the backup data transmitted by the first node, deleting, by the second node, second backup data locally stored in the second node exceeding a local storage capacity to satisfy the local storage capacity, wherein the second backup data is determined according to backup time.

10. The method according to claim 1, wherein after receiving, by the second node, the backup data transmitted by the first node according to the first cycle, the method further comprises:
verifying, by the second node, correctness of the backup data; and
in a case of the backup data being correct, transmitting, by the second node, a backup data reception confirmation message to the first node.

11. A data backup device, applied to a second node, the device comprising:
a backup module (40), which is configured to receive backup data transmitted by a first node according to a first cycle, wherein the first node and the second node are cooperation nodes to each other; and
a deletion module (42), which is configured to delete backup data of the first node locally stored in the second node according to a request of the first node;
**characterized in that**:
the device operates on a network architecture comprising a data platform and multiple nodes, including the first and second node; and
wherein the first node and the second node are different nodes on the network architecture.

## Patentansprüche

1. Datensicherungsverfahren, wobei das Verfahren Folgendes umfasst:
Empfangen (202) von Sicherungsdaten, die von einem ersten Knoten gemäß einem ersten Zyklus übertragen werden, von einem zweiten Knoten, wobei der erste Knoten und der zweite Knoten Zusammenwirkungsknoten für einander sind; und
Löschen (204) von Sicherungsdaten des ersten Knotens, die lokal im zweiten Knoten gespeichert sind, durch den zweiten Knoten gemäß einer Anforderung des ersten Knotens;
**dadurch gekennzeichnet, dass**
das Verfahren in einer Netzwerkarchitektur betrieben wird, die die Datenplattform und mehrere Knoten umfasst, die den ersten und den zweiten Knoten beinhalten; und
wobei der erste Knoten und der zweite Knoten verschiedene Knoten in der Netzwerkarchitektur sind.

2. Verfahren nach Anspruch 1, wobei das Verfahren, nachdem der zweite Knoten eine Datensicherung des ersten Knotens gemäß dem ersten Zyklus durchgeführt hat, ferner Folgendes umfasst:
in einem Fall, in dem der erste Knoten offline ist, Übertragen der Sicherungsdaten des ersten Knotens durch den zweiten Knoten zur Datenplattform.

3. Verfahren nach Anspruch 2, wobei das Übertragen der Sicherungsdaten des ersten Knotens durch den zweiten Knoten zur Datenplattform Folgendes umfasst:
Übertragen einer Sicherungsdatenwiederherstellungsanforderungsnachricht durch den zweiten Knoten zur Datenplattform; und
nach Empfangen einer Sicherungsdatenwiederherstellungsakzeptanznachricht,
die von der Datenplattform rückgemeldet wird, Übertragen der Sicherungsdaten des ersten Knotens, die lokal im zweiten Knoten gespeichert sind, durch den zweiten Knoten zur Datenplattform.

4. Verfahren nach Anspruch 3, wobei das Verfahren nach dem Übertragen der Sicherungsdaten des ersten Knotens, die lokal im zweiten Knoten gespeichert sind, durch den zweiten Knoten zur Datenplattform ferner Folgendes umfasst:
Empfangen einer Sicherungsdatenbestätigungsnachricht, die von der Datenplattform übertragen wird, durch den zweiten Knoten; und
Löschen der lokal gespeicherten Sicherungsdaten des ersten Knotens, die zur Datenplattform übertragen werden, durch den zweiten Knoten,
wobei die Sicherungsdatenbestätigungsnachricht rückgemeldet wird, nachdem die Datenplattform die Korrektheit der empfangenen Sicherungsdaten bestätigt hat.

5. Verfahren nach Anspruch 1, wobei die Sicherungsdaten Folgendes umfassen: Daten, die vom ersten Knoten während einer Periode von einer Zeit einer letzten Übertragung von Sicherungsdaten vom ersten Knoten zum zweiten Knoten bis zu einer aktuellen Zeit erzeugt werden.

6. Verfahren nach Anspruch 3, wobei die Sicherungsdatenwiederherstellungsanforderungsnachricht eine Startzeit und eine Endzeit einer Sicherung des ersten Knotens in einem Zusammenwirkungsknoten des ersten Knotens umfasst.

7. Verfahren nach Anspruch 3, wobei die Sicherungsdatenwiederherstellungsakzeptanznachricht eine Startzeit und eine Endzeit einer von der Datenplattform gewünschten Wiederherstellung der Sicherungsdaten des ersten Knotens umfasst.

8. Verfahren nach Anspruch 1, wobei das Löschen der Sicherungsdaten des ersten Knotens, die lokal im zweiten Knoten gespeichert sind, durch den zweiten Knoten gemäß der Anforderung des ersten Knotens Folgendes umfasst:
Löschen von ersten Sicherungsdaten, die lokal im zweiten Knoten gespeichert sind, durch den zweiten Knoten gemäß der Anforderung des ersten Knotens, wobei die ersten Sicherungsdaten Daten sind, die vom ersten Knoten zu einer Datenplattform übertragen werden.

9. Verfahren nach Anspruch 1 oder Anspruch 8, wobei
das Verfahren ferner Folgendes umfasst:
in einem Fall des Empfangens der Sicherungsdaten, die vom ersten Knoten übertragen werden, Löschen von zweiten Sicherungsdaten, die lokal im zweiten Knoten gespeichert sind und eine lokale Speicherkapazität überschreiten, um die lokale Speicherkapazität zu erfüllen, durch den zweiten Knoten, wobei die zweiten Sicherungsdaten gemäß einer Sicherungszeit bestimmt werden.

10. Verfahren nach Anspruch 1, wobei das Verfahren nach dem Empfangen der Sicherungsdaten, die vom ersten Knoten gemäß dem ersten Zyklus übertragen werden, durch den zweiten Knoten ferner Folgendes umfasst:
Verifizieren einer Korrektheit der Sicherungsdaten durch den zweiten Knoten; und
in einem Fall, in dem die Sicherungsdaten korrekt sind, Übertragen einer Sicherungsdatenempfangsbestätigungsnachricht durch den zweiten Knoten zum ersten Knoten.

11. Datensicherungsvorrichtung, die auf einen zweiten Knoten angewandt wird, wobei die Vorrichtung Folgendes umfasst:
ein Sicherungsmodul (40), das dazu ausgelegt ist, Sicherungsdaten, die von einem ersten Knoten gemäß einem ersten Zyklus übertragen werden, zu empfangen, wobei der erste Knoten und der zweite Knoten Zusammenwirkungsknoten für einander sind; und
ein Löschmodul (42), das dazu ausgelegt ist, Sicherungsdaten des ersten Knotens, die lokal im zweiten Knoten gespeichert sind, gemäß einer Anforderung des ersten Knotens zu löschen;
**dadurch gekennzeichnet, dass**:
die Vorrichtung in einer Netzwerkarchitektur betrieben wird, die eine Datenplattform und mehrere Knoten umfasst, die den ersten und den zweiten Knoten beinhalten; und
wobei der erste Knoten und der zweite Knoten verschiedene Knoten in der Netzwerkarchitektur sind.

## Revendications

1. Méthode de sauvegarde des données, la méthode comprend :
la réception (202), par un deuxième noeud, de données de sauvegarde transmises par un premier noeud selon un premier cycle, le premier noeud et le deuxième noeud étant des noeuds de coopération l'un pour l'autre ; et
la suppression (204), par le second noeud, des données de sauvegarde du premier noeud stockées localement dans le second noeud, à la demande du premier noeud ; **caractérisé par le fait que** la méthode fonctionne sur une architecture de réseau comprenant la plate-forme de données et de multiples noeuds, y compris le premier et le second noeuds ; et
le premier noeud et le second noeud sont des noeuds différents dans l'architecture du réseau.

2. Méthode selon la revendication 1, dans laquelle, après que le deuxième noeud a effectué la sauvegarde des données du premier noeud selon le premier cycle, la méthode comprend en outre :
dans le cas où le premier noeud est hors ligne, la transmission, par le deuxième noeud, des données de sauvegarde du premier noeud à la plate-forme de données.

3. La méthode selon la revendication 2, dans laquelle la transmission, par le deuxième noeud, des données de sauvegarde du premier noeud à la plate-forme de données comprend :
la transmission, par le deuxième noeud, d'un message de demande de récupération des données de sauvegarde à la plate-forme de données ; et
après réception d'un message d'acceptation de récupération des données de sauvegarde renvoyé par la plate-forme de données, transmettre, par le deuxième noeud, les données de sauvegarde du premier noeud stockées localement dans le deuxième noeud à la plate-forme de données.

4. Méthode selon la revendication 3, dans laquelle, après avoir transmis à la plate-forme de données, par le deuxième noeud, les données de sauvegarde du premier noeud stockées localement dans le deuxième noeud, la méthode comprend en outre :
la réception, par le deuxième noeud, d'un message de confirmation des données de sauvegarde transmis par la plate-forme de données ; et
la suppression, par le deuxième noeud, des données de sauvegarde du premier noeud stockées localement et transmises à la plate-forme de données,
le message de confirmation des données de sauvegarde est renvoyé après que la plate-forme de données a confirmé l'exactitude des données de sauvegarde reçues.

5. Procédé selon la revendication 1, dans lequel les données de sauvegarde comprennent : les données générées par le premier noeud au cours d'une période allant de la dernière transmission de données de sauvegarde du premier noeud au second noeud jusqu'à l'heure actuelle.

6. Méthode selon la revendication 3, dans laquelle le message de demande de récupération des données de sauvegarde comprend l'heure de début et l'heure de fin de la sauvegarde du premier noeud dans un noeud de coopération du premier noeud.

7. Méthode selon la revendication 3, dans laquelle le message d'acceptation de la récupération des données de sauvegarde comprend l'heure de début et l'heure de fin de la récupération des données de sauvegarde du premier noeud souhaitée par la plate-forme de données.

8. Procédé selon la revendication 1, dans lequel la suppression, par le deuxième noeud, des données de sauvegarde du premier noeud stockées localement dans le deuxième noeud conformément à la demande du premier noeud comprend :
la suppression, par le deuxième noeud, des premières données de sauvegarde stockées localement dans le deuxième noeud conformément à la demande du premier noeud, les premières données de sauvegarde étant des données transmises par le premier noeud à une plate-forme de données.

9. Méthode selon la revendication 1 ou la revendication 8, dans laquelle
la méthode comprend en outre
en cas de réception des données de sauvegarde transmises par le premier noeud, la suppression, par le deuxième noeud, des deuxièmes données de sauvegarde stockées localement dans le deuxième noeud dépassant une capacité de stockage locale pour satisfaire la capacité de stockage locale, les deuxièmes données de sauvegarde étant déterminées en fonction de l'heure de sauvegarde.

10. Procédé selon la revendication 1, dans lequel, après réception, par le deuxième noeud, des données de sauvegarde transmises par le premier noeud selon le premier cycle, le procédé comprend en outre :
la vérification, par le deuxième noeud, de l'exactitude des données de sauvegarde ; et
si les données de sauvegarde sont correctes, transmettre, par le deuxième noeud, un message de confirmation de réception des données de sauvegarde au premier noeud.

11. Dispositif de sauvegarde de données, appliqué à un second noeud, le dispositif comprend :
un module de sauvegarde (40), configuré pour recevoir des données de sauvegarde transmises par un premier noeud selon un premier cycle, le premier noeud et le second noeud étant des noeuds de coopération l'un pour l'autre ; et
un module de suppression (42), configuré pour supprimer les données de sauvegarde du premier noeud stockées localement dans le second noeud à la demande du premier noeud ;
**caractérisé par le fait que** : le dispositif fonctionne sur une architecture de réseau comprenant une plate-forme de données et de multiples noeuds, y compris le premier et le second noeuds ; et
le premier noeud et le second noeud sont des noeuds différents dans l'architecture du réseau.
